# EUROPÄISCHE PATENTSCHRIFT

(11) **EP 1 701 870 B1**
(45) Veröffentlichungstag und Bekanntmachung des Hinweises auf die Patenterteilung: **23.04.2008**
(21) Anmeldenummer: 04802668.6
(22) Anmeldetag: 04.11.2004
(51) Int. Cl.: B60S 1/34, B60S 1/32

(54) **WISCHEREINRICHTUNG ZUM WISCHEN EINER WINDSCHUTZSCHEIBE**
WIPER SYSTEM FOR WIPING A WINDSCREEN
SYSTEME D'ESSUIE-GLACE POUR ESSUYER UN PARE-BRISE

(30) Priorität: 29.12.2003 DE 10361746
(43) Veröffentlichungstag der Anmeldung: 20.09.2006
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2004/002435
(87) Internationale Veröffentlichungsnummer: WO 2005/063533

(56) Entgegenhaltungen:
- WO-A-01/68423
- WO-A-96/22204
- US-A1- 2003 233 724

## Beschreibung

Die Erfindung betrifft eine Wischereinrichtung zum Wischen einer Windschutzscheibe, insbesondere eine Wischereinrichtung mit einer Wischarm-Hubsteuerung.

Zur Vergrößerung des Wischfeldes von Wischereinrichtungen werden Wischarm-Hubsteuerungen eingesetzt, insbesondere in Form von Vier-Gelenk-Wischarmen. Vier-Gelenk-Wischarme weisen im Wesentlichen neben dem eigentlichen Wischarm zwei Lenkerhebel auf, die jeweils über ein Gelenk mit dem Wischarm verbunden sind. Durch eine geeignete kinematische Auslegung wird vom Wischarm bei Verschwenken der Lenkerhebel eine Hub- und eine Schwenkbewegung ausgeübt. Der Antrieb des Vier-Gelenk-Wischarms erfolgt über einen der beiden Lenkerhebel, der als Antriebshebel mit einem elektrischen Antrieb ausgestattet ist. Der zweite Lenkerhebel, der Steuerhebel, dient dazu, den Hub des Wischarms zu bewirken und ist lediglich an einem Blindlager befestigt, das keine Drehmomente überträgt.

Die Auflagekraft des Wischarms auf die Windschutzscheibe wird üblicherweise durch eine Zugfeder erzeugt. Der Wischarm weist dazu ein Wischarmgelenk auf, wobei die Zugfeder im Gelenkbereich eines zweiteiligen Wischarms angeordnet ist. Während ein Koppelteil des zweiteiligen Wischarms mit den Lenkerhebeln verbunden ist, ist an dem Gelenkteil das Wischerblatt angeordnet, das mit Hilfe der Zugfeder gegen die Windschutzscheibe gedrückt wird. Alternativ wird die Anpresskraft des Wischerblattes mit einer Druckfeder, die im Gelenkbereich des Wischarms angeordnet ist, erzeugt.

Das Vorsehen des Gelenkes in dem Wischarm führt zu einer relativ hohen Bauweise des Wischarms, um eine ausreichende Steifigkeit im Bereich des Gelenks zu erreichen. Zudem benötigen die Zugfeder und deren Befestigungen Bauraum, der die Höhe des Wischarms in bezüglich der Windschutzscheibe senkrechter Richtung vergrößert.

Darüber hinaus weist das Gelenk üblicherweise Spiel auf, der sich bei längerem Gebrauch des Wischarms weiter vergrößert. Dies führt zu einer Verringerung der Lebensdauer des Wischarms und kann zu Rattern und/oder Überschwingen in den Umkehrlagen des Wischarms führen.

Es ist Aufgabe der vorliegenden Erfindung, einen möglichst flachen Vier-Gelenk-Wischarm zur Verfügung zu stellen, der kostengünstig herstellbar ist und ein günstiges Verschleißverhalten aufweist.

Eine Vorrichtung mit den Merkmalen des Oberbegriffs des Anspruchs 1 ist aus der WO-A-01/68423 bekannt. Weiterhin ist aus der WO-A 96/22204 eine Wischeinrichtung bekannt, die einen Wischerarm mit zwei Lenkerhebeln aufweist. Diese Lenkerhebel sind aus Stahlblech hergestellt und aus Stabilitätsgründen als Stantz-Biege-Formteil ausgebildet.

Diese Aufgabe wird durch die Wischereinrichtung nach Anspruch 1 gelöst.

Weitere vorteilhafte Ausgestaltungen der Erfindung sind in den Abhängigen Ansprüchen angegeben.

Erfindungsgemäß ist einen Wischereinrichtung zum Wischen einer Windschutzscheibe eines Kraftfahrzeuges vorgesehen, der einen Wischerarm und zwei Lenkerhebel aufweist. Die Lenkerhebel sind in einer Ebene schwenkbeweglich an Befestigungspunkten mit dem Wischerarm verbunden. Mindestens einer der Lenkerhebel ist in einer im Wesentlichen senkrecht zur Wischerebene verlaufenden Richtung federelastisch ausgeführt, um einer Anpresskraft des Wischarms auf die Windschutzscheibe im montierten Zustand zu bewirken.

Eine Idee der vorliegenden Erfindung besteht darin, eine Vier-Gelenk-Wischereinrichtung zur Verfügung zu stellen, bei der die Anforderung an die Bauhöhe des Wischerarms verringert sind, da die Anpresskraft des Wischerarms bzw. des mit dem Wischerarm verbundenen Wischerplatz auf die Windschutzscheibe durch einen oder beide Lenkerhebel bewirkt wird. Insbesondere kann durch die federelastische Ausgestaltung des Lenkerhebels der Wischerarm gelenklos ausgebildet sein, da die Anpresskraft über den Lenkerhebel zur Verfügung gestellt wird. Dadurch spart man sich auf einfache Weise das Vorsehen eines Gelenks im Wischarm und einer entsprechenden Zug- oder Druckfeder, das bei Ausführungen gemäß dem Stand der Technik die Anpresskraft auf die Windschutzscheibe erzeugt. Durch das Einsparen des Gelenks kann somit die Bauhöhe des Wischarms verringert werden und die Wischereinrichtung ist weniger verschleißanfällig.

Darüber hinaus ist die Herstellung stark vereinfacht, da der Lenkerhebel als Balkenfederelement ausgebildet werden kann.

Insbesondere kann einer der Lenkerhebel als Antriebshebel und ein anderer der Lenkerhebel als Steuerhebel ausgebildet sein, wobei der Wischerarm durch ein Verschwenken des Antriebshebels um eine Antriebsachse verschwenkt und angehoben wird.

Um einer Anpresskraft des Wischerarms auf die Windschutzscheibe zu erreichen, ist mindestens einer der Lenkerhebel im eingebauten Zustand vorgespannt.

Die Lenkerhebel können jeweils eine Abklappmechanik aufweisen, um den Wischerarm in ein Wartungsposition zu verschwenken, so dass ein mit dem Wischerarm verbundener Wischer gewartet oder ausgetauscht werden kann. Die Lenkerhebel sind dabei so gestaltet, um in der Wartungsposition in einem Winkel von der Wischerebene bzw. der Windschutzscheibe abzustehen, so dass der Wischerarm nicht mehr aufliegt und somit zugänglich ist.

Die Lenkerhebel können dann jeweils eine Schnappvorrichtung aufweisen, um die Lenkerhebel in der Wartungsposition zu halten, wobei die Lenkerhebel so gestaltet sind, um durch ein Zurückbewegen der Lenkerhebel in die Wischerebene durch Ausüben einer Rückstellkraft die Wartungsposition zu verlassen.

Gemäß einer weiteren Ausführungsform sind die Lenkerhebel aus einem Tiefziehmaterial gefertigt, um diese möglichst einfach z. B. durch ein Stanzprozess herstellen zu können.

Insbesondere können die Lenkerhebel an den Befestigungspunkten mit dem Wischerarm und/oder an den Schwenkachsen mit Hilfe eines verstemmten Befestigungselementes gekoppelt sein.

Bevorzugte Ausführungsformen der vorliegenden Erfindung werden im Folgenden anhand der beigefügten Zeichnungen näher erläutert. Es zeigen:
Figur 1 eine Anordnung einer Vier-Gelenk-Wischereinrichtung an einem Kraftfahrzeug gemäß dem Stand der Technik;
Figur 2 eine rückseitige Darstellung einer Wischereinrichtung für ein Vier-Gelenk-Wischersystem nach dem Stand der Technik;
Figur 3 eine Vier-Gelenk-Wischereinrichtung gemäß einer ersten Ausführungsform der vorliegenden Erfindung;
Figur 4 eine Ausführung eines Befestigungspunktes zwischen Lenkerhebel und Wischerarm;
Figur 5 eine Darstellung einer Befestigung des Lenkerhebels an seiner Schwenkachse;
Figur 6a und 6b Darstellungen eines Lenkerhebels mit Befestigungselementen und Lagerbolzen im entspannten und im eingebauten Zustand;
Figur 7 eine weitere Ausführung des Befestigungselementes an der Schwenkachse;
Figur 8 eine weitere Ausführungsform einer Wischereinrichtung mit umlappten Befestigungsteilen; und
Figur 9 eine Darstellung eines Lenkerhebels mit integrierter Abklappmechanik.

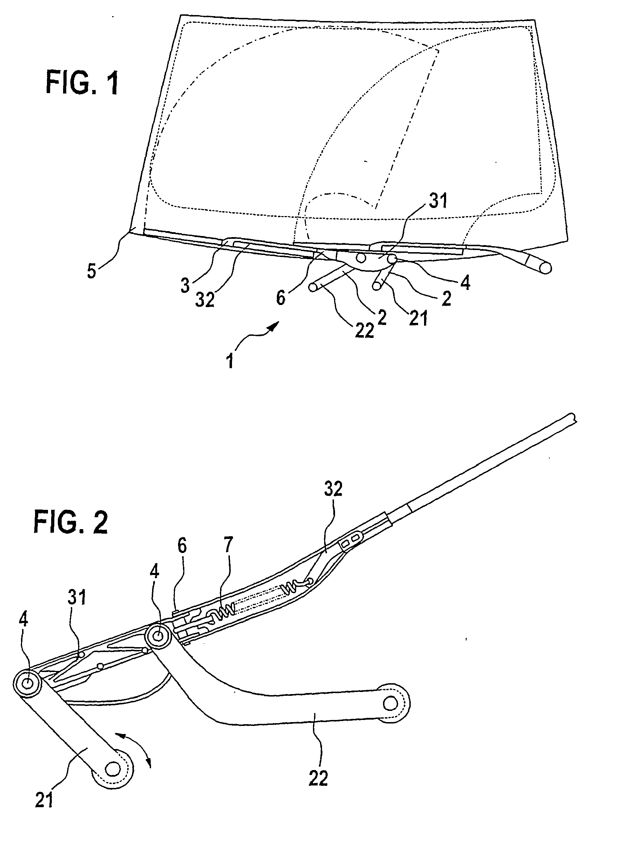

In Figur 1 ist ein Wischersystem dargestellt, wie es heutzutage bei Kraftfahrzeugen zum Einsatz kommt. Es weist eine Wischereinrichtung 1 auf, die als Vier-Gelenk-Wischereinrichtung ausgebildet ist. Die Vier-Gelenk-Wischereinrichtung weist zwei Lenkerhebel 2 mit einem Antriebshebel 21 und einem Steuerhebel 22 auf, die mit einem Wischerarm 3 über Befestigungspunkte 4 verbunden sind. Beim Verschwenken des Wischerarms 3 kann aufgrund des Stützens durch den Steuerhebel 22 neben der Schwenkbewegung auch eine Hubbewegung des Wischerarms 3 erfolgen, so dass der gesamte Wischbereich auf der Windschutzscheibe 5 vergrößert ist. Der Antrieb des Wischerarms 3 erfolgt dadurch, dass der Antriebshebel 21 um seine Schwenkachse 11 verschwenkt wird. Der Steuerhebel 22 bewirkt die Hubbewegung des Wischerarms 3.

Wie in Verbindung mit der rückseitigen Darstellung der Wischereinrichtung in Figur 2 ersichtlich, weist der Wischerarm 3 ein Gelenk 6 auf, das Koppelteil 31 und Gelenkarm 32 des Wischerarms 3 miteinander verbindet. An dem Gelenk 6 ist ein Federelement so angebracht, um den Gelenkarm 32 des Wischerarms 3 gegen die Windschutzscheibe 5 zu pressen.

Das Gelenk 6 in dem Wischerarm 3 hat den Nachteil, dass es Verschleiß unterliegt, der die Lebensdauer reduziert, und der beim Wischen zu einem Rattern und Überschwingen in den Umkehrlagen führt. Dies reduziert insbesondere die Lebensdauer des Wischerarms, so dass dieser häufig ausgetauscht werden muss.

In Figur 2 erkennt man das Federelement 7, das in dem mit U-förmigen Querschnitt ausgebildeten Wischerarm 3 aufgenommen ist. Durch die Abmessungen des Federelementes 7 ist im Wesentlichen die Bauhöhe des Wischerarms 3 vorgegeben.

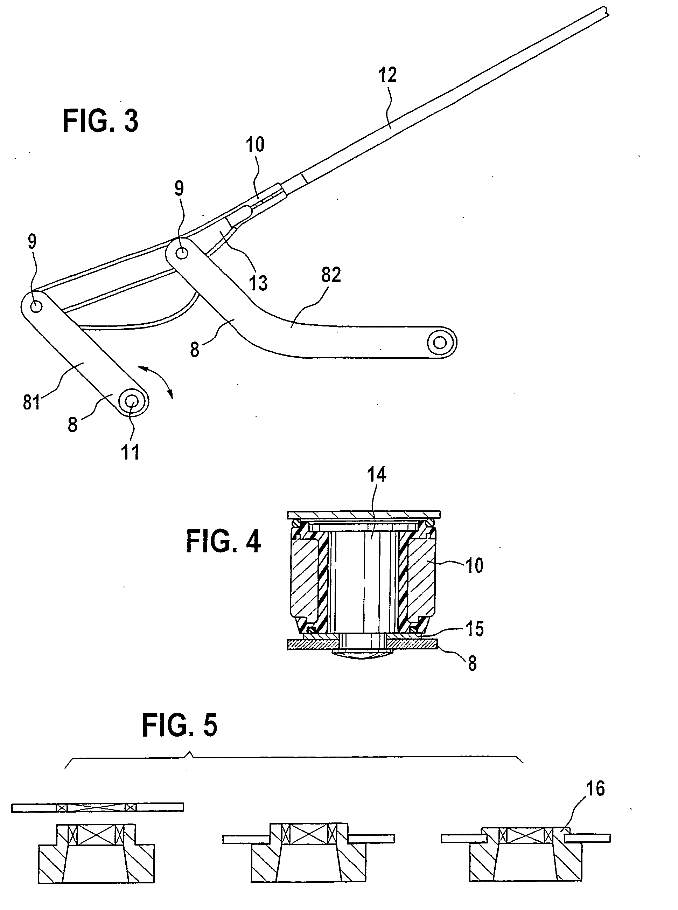

In Figur 3 ist eine Wischereinrichtung gemäß einer ersten Ausführungsform der Erfindung dargestellt. Die Wischereinrichtung 1 weist zwei Lenkerhebel 81, 82 auf, die an Befestigungspunkten 9 mit einem Wischarm 10 verbunden sind. Der Wischarm 10 weist im Gegensatz zur Ausführungsform gemäß dem Stand der Technik kein Gelenk auf, um die Anpresskraft auf die Windschutzscheibe 5 zu erzeugen. Während der Wischerarm 10 möglichst steif ausgebildet ist, sind die Lenkerhebel 81, 82 federelastisch ausgeführt, und so unter einer Vorspannung montiert, dass die Anpresskraft im Wesentlichen vollständig durch die Lenkerhebel 81, 82 erzeugt wird. Selbstverständlich kann auch vorgesehen sein, dass die Anpresskraft durch eine Verspannung der Lenkerhebel 81, 82 und des Wischerarms 10 erzeugt wird.

Insbesondere sind die Lenkerhebel 81, 82 als Antriebshebel 81 und als Steuerhebel 82 ausgebildet, um die Schwenk- und Hubbewegung des Wischerarms 10 zu erreichen. Der Antriebshebel 81 weist eine Schwenkachse 11 auf, an der der elektrische Antrieb (nicht gezeigt) der Wischereinrichtung angreift und durch ein verschwenken des Antriebshebels 81 die Bewegung der Wischereinrichtung ermöglicht.

An den Befestigungspunkten 9 sind die Lenkerhebel 8 schwenkbeweglich mit dem Wischerarm 10 verbunden, d. h. es kann kein Drehmoment zwischen Lenkerhebel 8 und Wischerarm 10 im Wesentlichen in einer Richtung parallel zur Wischerebene übertragen werden. Die Befestigungspunkte 9 sind jedoch so ausgebildet, dass die Vorspannkraft, die die vorgespannten Lenkerhebel 8 auf den Wischerarm 10 ausüben, den Wischerarm 10 auf die Windschutzscheibe 5 drücken.

Durch das Fehlen des Gelenks an dem Wischerarm 10 kann diese mit einer geringeren Bauhöhe ausgestaltet werden, so dass die Anströmung des Wischerblatts, das mit dem Wischerarm 10 starr verbunden ist, ungestörter verläuft. Die Kopplung zwischen Wischerblatt 12 und dem Wischerarm 10 erfolgt über ein Kopplungselement 13, dass auf vielfältige Weise ausgebildet werden kann und dazu dient, Wischerarm 10 und Wischerblatt 12 über ein Drehgelenk möglichst starr miteinander zu verbinden.

In Figur 4 ist beispielhaft die Verbindung zwischen den Lenkerhebeln 8 und dem Wischerarm 10 an dem Befestigungspunkt dargestellt. Es ist dargestellt, dass der Wischerarm 10 mit den Lenkerhebeln 8 über einen Befestigungsbolzen 14 schwenkbeweglich verbunden ist, wobei zwischen dem jeweiligen Lenkerhebel 8 und dem Wischerarm 10 eine Gleitscheibe 15 angeordnet ist, um eine möglichst geringe Reibung beim Betrieb der Wischereinrichtung zu erreichen. Der Befestigungsbolzen 14 reicht durch eine entsprechende Bohrung des Lenkerhebels 8 und wird mit diesem vernietet. Die Lagerung zwischen dem Lenkerhebeln 8 und den Wischerarm 10 kann als Kunststoffgelenklagerung oder als Lagerung mit angenietetem Wälzlager ausgeführt werden. Beide Lager sind vorzugsweise als Zylinderlager mit nur einem Drehfreiheitsgrad ausgeführt.

In Figur 5 ist die Befestigung des Lenkerhebels 8 an seiner Schwenkachse dargestellt. Der jeweilige Lenkerhebel 8 weist dazu eine Öffnung auf, durch die ein Befestigungselement 16 hindurch reicht, das nach dem Zusammenbau verstemmt wird, so dass der Lenkerhebel 8 gegen ein Verschwenken sicher auf dem Befestigungselement 16 gehalten wird. Vorzugsweise ist die Öffnung bei dem Antriebshebel 81 kantig, entsprechend der Form des Befestigungselementes 16 ausgeführt, um ein Drehmoment des elektrischen Wischerantriebs (nicht gezeigt) übertragen zu können.

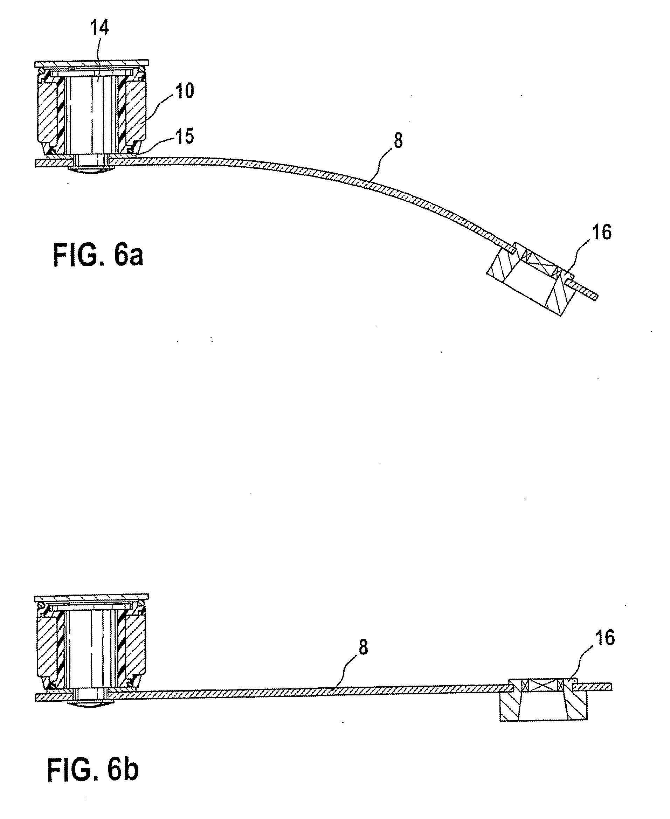

In den Figuren 6a und 6b ist ein Lenkerhebel 8 im nicht-eingebauten und im eingebauten Zustand dargestellt. Man erkennt, dass der Lenkerhebel im nicht-eingebauten Zustand eine Krümmung aufweist und im eingebauten Zustand im Wesentlichen gerade ist, so dass der Lenkerhebel 8 im eingebauten Zustand gegenüber dem nicht eingebauten Zustand stark verspannt ist. Die Verspannung des Lenkerhebels 8 bewirkt die Anpresskraft des Wischarms 10, so dass weitere Maßnahmen zur Erzeugung einer Anpresskraft im Wischarm 10 nicht notwendig sind. Die Lenkerhebel 8 werden vorzugsweise als Balkenfederelement geometrisch so ausgeführt, dass durch die jeweilige Vorspannung im montierten Zustand am Fahrzeug die erforderliche Auflagekraft für das Wischerblatt 12 erzeugt wird. Bei einer Auflagekrafterzeugung durch Antriebshebel 81 und Steuerhebel 82 wird die Vorspannkraft auf beide Lenkerhebel 8 etwa zur Hälfte verteilt, um eine unnötig hohe Belastung der Befestigung mit der Schwenkachse 11 und an den Befestigungspunkten 9 zu vermeiden. Hubbewegungen des Wischerblattes 12 z. B. aufgrund der Wölbung der Windschutzscheibe 5 werden von den elastischen Lenkerhebeln 8 aufgenommen.

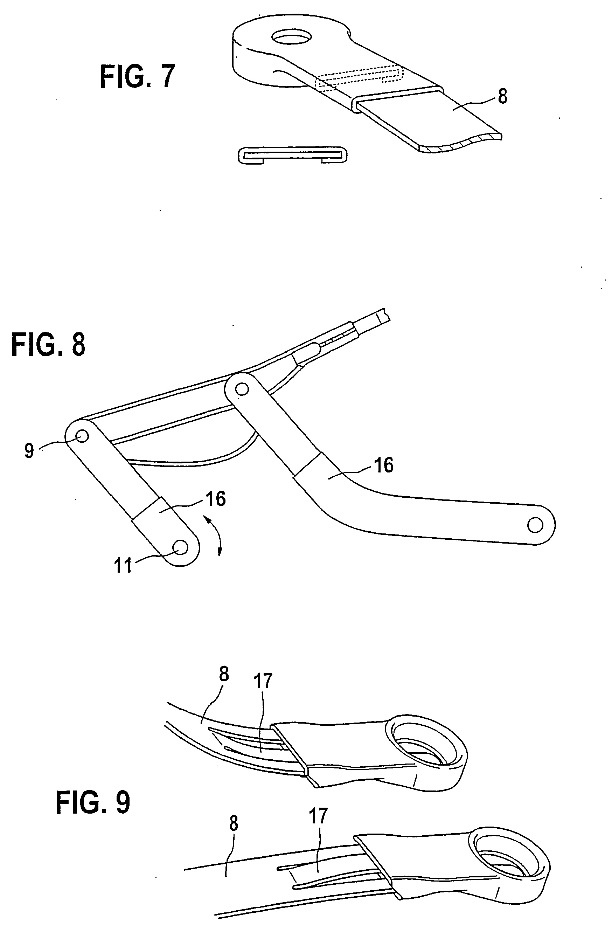

In Figur 7 ist eine weitere Ausführungsform des Lenkerhebels 8 ausgeführt. Um die Verbiegung nahe der Schwenkachse und somit die Biegebelastung dort zu verringern, wird der Lenkerhebel 8 in einem der Schwenkachse zugewandten Abschnitt mit einem Blechbefestigungsteil umlappt, über das zum einen das Drehmoment des Antriebs übertragen werden kann und über die Länge der Umlappung zum anderen die Federkraft bei der Verspannung des Lenkerhebels 8 genau eingestellt werden kann.

Wie in Figur 8 gezeigt, werden insbesondere sowohl Antriebshebel 81 als auch Steuerhebel 82 so mit Blechbefestigungsteilen 16 umlappt, dass die Federkraft im Wesentlichen nur durch die nicht-umlappten Abschnitte des Antriebshebels 81 und des Steuerhebels 82 hervorgerufen wird, um möglichst gleiche Federkräfte durch die üblicherweise verschieden langen Antriebshebel 81 und Steuerhebel 82 zu bewirken, sind die nicht-umlappten Abschnitte der Lenkerhebel 8 möglichst gleichem Querschnitt und mit gleicher Länge ausgebildet. Anstelle des umlappenden Blechbefestigungsteils 16 kann der Lenkerhebel 8 auch mit verschiedenen Querschnitten, insbesondere mit einem größeren Querschnitt des der Schwenkachse 11 zugewandten Abschnittes und einem geringeren Querschnitt des dem Befestigungspunkt 9 zugewandten Abschnittes ausgebildet sein. Durch Wahl der Verhältnisse zwischen dem Befestigungspunkten zugewandten Abschnitten der Lenkerhebel 8 kann der Anteil der Anpresskraft jedes der Lenkerhebel 8 eingestellt werden.

In Figur 9 ist eine Abklappmechanik dargestellt, die es ermöglicht durch eine Zugkraft in Richtung der Vorspannung der Lenkerhebel 8 die Wischereinrichtung in eine Wartungsposition zu bringen, in der die Lenkerhebel 8 in einem verspannten Zustand einrasten. Die Lenkerhebel 8 sind dazu mit einer "Haarspangenmechanik" versehen, d. h. mit einem Verspannelement 17, das zwischen zwei verspannten Zuständen hin- und herschnappen kann und das in einem ersten verspannten Zustand den Lenkerhebel 8 in einer Betriebsposition hält und in einem zweiten verspannten Zustand den Lenkerhebel 8 gegen seine Vorspannung von der Wischerebene abstehen lässt, so dass das an dem Wischerarm 10 befestigte Wischerblatt 12 freisteht und nicht auf der Windschutzscheibe 5 aufliegt, so dass das Wischerblatt 12 gewartet oder gewechselt werden kann.

Die Haarspangenmechanik kann bei Ausbilden der Lenkerhebel 8 als Stanzteil in die Lenkerhebel 8 integriert werden, insbesondere ist es bei Verwenden einer solchen Abklappmechnik notwendig, die Lenkerhebel 8 und den Wischarm 12 in eine Wischblattwechselposition zu verfahren, in der beide Lenkerhebel 8 bzw. Lenkerhebelabschnitte, die mit der Haarspangenmechahik abgeklappt werden können, im Wesentlichen zueinander parallel liegen, so dass die beiden Lenkerhebel 8 beim Abklappen nicht gegeneinander verspannt werden.

Die Lenkerhebel 8 können auf einfache Weise als Stanzteil hergestellt werden, die durch geeignete Verfahren in eine Figur 6a dargestellte Verbiegung gebracht werden, so dass bei zurückbiegen der Lenkerhebel 8 eine Federkraft wirkt. Auch andere Möglichkeiten sind denkbar, die Lenkerhebel 8 so auszubilden, dass diese eine Vorspannung beim Einbau in eine Wischereinrichtung aufweisen. Je nach Dicke des Lenkerhebels 8 kann es sinnvoll sein, den Lenkerhebel 8 an der Verbindung zwischen Schwenkachse 11 und Lenkerhebel 8 bzw. zwischen Befestigungspunkt 9 und Lenkerhebel 8 mit geeigneten Stützelementen zu verstärken, da durch die an diesen Stellen vorhandene Bohrung die Lenkerhebel 8 an diesen Stellen nur geringere Biegekräfte aufnehmen können. Insbesondere eine Verbiegung an diesen Stellen aufgrund der Vorspannung des Lenkerhebels sollte vermieden werden.

Insbesondere ist eine Ausbildung der Lenkerhebel 8 aus Federstahl sinnvoll.

Wesentliche Vorteile der vorliegenden Erfindung bestehen darin, dass die Wischereinrichtung mit einer geringen Bauhöhe aufgebaut werden kann, da auf ein Gelenk im Wischarm verzichtet werden kann. Weiterhin ergibt sich ein geringerer Verschleiß, da der Wischerarm starr ist und somit kein Rattern oder Überschwingen in den Umkehrlagen aufgrund von Spiel in dem Gelenk in dem Wischerarm auftreten kann. Die flache Bauweise ist weiterhin für eine erhöhte Sicherheit, z. B. bezüglich des Fußgängeraufprallschutzes vorteilhaft. Insbesondere bei Verwendung von Aero-Wischblättern kann der Wischarm durch die flache Bauweise einfacher in schmale Haubenspalten der Frontplatte untergebracht werden.

## Patentansprüche

1. Wischereinrichtung (1) zum Wischen einer Windschutzscheibe (5) eines Kraftfahrzeugs mit einem Wischerarm (10) und zwei Lenkerhebeln (8), wobei die Lenkerhebel (8) in einer Ebene schwenkbeweglich an Befestigungspunkten (9) mit dem Wischerarm (10) verbunden sind, wobei mindestens einer der Lenkerhebel (8) im wesentlichen senkrecht zur Wischerebene federelastisch ausgeführt ist, um eine Anpresskraft des Wischerarms (10) auf die Windschutzscheibe zu bewirken, **dadurch gekennzeichnet, daß** der mindestens eine Lenkerhebel (8) als Balkenfederelement ausgebildet und im eingebauten Zustand vorgespannt ist.

2. Wischereinrichtung (1) nach Anspruch 1, wobei einer der Lenkerhebel (8) ein Antriebshebel (81) und ein anderer der Lenkerhebel (8) ein Steuerhebel (82) ist, wobei der Wischerarm (10) durch ein Verschwenken des Antriebshebels (81) um eine Schwenkachse (11) bewegt wird.

3. Wischereinrichtung (1) nach Anspruch 1 oder 2, wobei der Wischerarm gelenklos ausgeführt ist.

4. Wischereinrichtung (1) nach einem der Ansprüche 1 bis 3, wobei der Wischerarm (10) mit einem Wischerblatt (12) über ein Drehgelenk verbunden ist.

5. Wischereinrichtung (1) nach einem der Ansprüche 1 bis 4, wobei die Lenkerhebel (8) jeweils eine Abklappmechanik aufweisen, um den Wischerarm (10) in eine Wartungsposition zu verschwenken, dass ein mit dem Wischerarm (10) verbundenes Wischerblatt (12) gewartet oder ausgetauscht werden kann, wobei die Lenkerhebel (8) so gestaltet sind, um in der Wartungsposition in einem Winkel von der Wischebene abzustehen, so der Wischerarm (10) zugänglich ist.

6. Wischereinrichtung (1) nach Anspruch 5, wobei die Lenkerhebel jeweils eine Schnappvorrichtung (17) aufweisen, um die Lenkerhebel (8) in der Wartungsposition zu halten, wobei die Lenkerhebel so gestaltet sind, um durch Zurückbewegen der Lenkerhebel in die Wischerebene mit einer Rückstellkraft die Wartungsposition zu verlassen.

7. Wischereinrichtung (1) nach einem der Ansprüche 1 bis 6, wobei die Befestigungsteile der Lenkerhebel (8) und/oder die Lenkerhebel (8) aus einem Tiefziehmaterial gefertigt sind.

8. Wischereinrichtung (1) nach einem der Ansprüche 1 bis 7, wobei die Lenkerhebel (8) mit dem Wischerarm (10) an den Befestigungspunkten mit einem verstemmten Befestigungselement (16) gekoppelt sind.

9. Wischereinrichtung nach einem der Ansprüche 1 bis 8, wobei mindestens einer der Lenkerhebel (8) mit einem ersten Querschnitt in einen ersten der Schwenkachse zugewandten Abschnitt und einen zweiten kleineren Querschnitt in einem zweiten dem Befestigungspunkt zugewandten Abschnitt versehen ist, um die Anpresskraft einzustellen.

## Claims

1. Wiper system (1) for wiping a windscreen (5) of a motor vehicle, with a wiper arm (10) and two link levers (8), wherein the link levers (8) are connected to the wiper arm (10) at fastening points (9) in a manner such that they are pivotable in one plane, and wherein at least one of the link levers (8) is of spring-elastic design essentially perpendicular to the wiper plane in order to produce a force pressing the wiper arm (10) against the windscreen, **characterized in that** the at least one link lever (8) is designed as a bar spring element and is prestressed in the fitted state.

2. Wiper system (1) according to Claim 1, wherein one of the link levers (8) is a driving lever (81) and another of the link levers (8) is a control lever (82), and wherein the wiper arm (10) is moved by pivoting of the driving lever (81) about a pivot axis (11).

3. Wiper system (1) according to Claim 1 or 2, wherein the wiper arm is designed without joints.

4. Wiper system (1) according to one of Claims 1 to 3, wherein the wiper arm (10) is connected to a wiper blade (12) via a rotary joint.

5. Wiper system (1) according to one of Claims 1 to 4, wherein the link levers (8) each have a folding-down mechanism in order to pivot the wiper arm (10) into a maintenance position such that a wiper blade (12) which is connected to the wiper arm (10) can be maintained or exchanged, and wherein the link levers (8) are designed so as, in the maintenance position, to protrude from the wiping plane at an angle such that the wiper arm (10) is accessible.

6. Wiper system (1) according to Claim 5, wherein the link levers each have a snap-in device (17) in order to hold the link levers (8) in the maintenance position, and wherein the link levers are designed so as to leave the maintenance position by the link levers being moved back into the wiper plane by a resetting force.

7. Wiper system (1) according to one of Claims 1 to 6, wherein the fastening parts of the link levers (8) and/or the link levers (8) are manufactured from a deep-drawing material.

8. Wiper system (1) according to one of Claims 1 to 7, wherein the link levers (8) are coupled to the wiper arm (10) at the fastening points by means of a caulked fastening element (16).

9. Wiper system according to one of Claims 1 to 8, wherein at least one of the link levers (8) is provided with a first cross section in a first section which faces the pivot axis and with a second, smaller cross section in a second section which faces the fastening point, in order to set the press-on force.

## Revendications

1. Installation d'essuyage (1) de pare-brise (5) de véhicule automobile comportant un bras d'essuie-glace (10) et deux bras de levier (8), les bras de levier (8) étant reliés de manière mobile en pivotement dans un plan en des points de fixation (9) au bras d'essuie-glace (10),
au moins l'un des bras de levier (8) étant élastique comme un ressort pratiquement perpendiculairement au plan d'essuyage pour exercer une force d'application du bras d'essuie-glace (10) contre le pare-brise,
**caractérisée en ce qu'**
au moins un bras de levier (8) est un élément de ressort-lame précontraint à l'état installé.

2. Installation d'essuie-glace (1) selon la revendication 1, dans laquelle l'un des bras de levier (8) est un levier d'entraînement (81) et l'autre bas de levier (8) est un levier de commande (82), le bras d'essuie-glace (10) étant entraîné par le pivotement du levier d'entraînement (81) autour d'un axe de pivotement (11).

3. Installation d'essuie-glace (1) selon la revendication 1 ou 2, dans laquelle le bras d'essuie-glace est un bras sans articulation.

4. Installation d'essuie-glace (1) selon l'une des revendications 1 à 3, dans laquelle le bras d'essuie-glace (10) est relié au balai d'essuie-glace (12) par une articulation de rotation.

5. Installation d'essuie-glace (1) selon l'une des revendications 1 à 4, dans laquelle les bras de levier (8) ont chacun un mécanisme de rabattement pour basculer le bras d'essuie-glace (10) dans une position d'intervention permettant d'entretenir ou de remplacer un balai d'essuie-glace (12) relié au bras d'essuie-glace (10),
les bras de levier (8) étant formés pour faire un angle s'écartant du plan d'essuyage dans la position d'intervention pour rendre accessible le bras d'essuie-glace (10).

6. Installation d'essuie-glace (1) selon la revendication 5, dans laquelle les bras de levier comportent chacun un dispositif d'enclipsage (17) pour tenir les bras de levier (8) en position d'intervention, les bras de levier étant conçus pour que par un mouvement de retour des bras de levier dans le plan d'essuyage, ils quittent la position d'intervention avec une force de rappel.

7. Installation d'essuie-glace (1) selon l'une des revendication 1 à 6, dans laquelle les pièces de fixation des bras de levier (8) et/ou les bras de levier (8) sont fabriqués en une matière par emboutissage profond.

8. Installation d'essuie-glace (1) selon l'une des revendication 1 à 7, dans laquelle les bras de levier (8) sont couplés au bras d'essuie-glace (10) en des points de fixation avec un élément de fixation (16), maté.

9. Installation d'essuie-glace (1) selon l'une des revendication 1 à 8, dans laquelle au moins l'un des bras de levier (8) est muni d'une première section dans un premier segment tourné vers l'axe de pivotement et une seconde section plus petite dans un second segment tourné vers le point de fixation, pour régler la force d'application.
